## Europäisches Patentamt
## European Patent Office
## Office européen des brevets

(11) Numéro de publication: **0 265 004 B1**

## FASCICULE DE BREVET EUROPEEN

(45) Date de publication de fascicule du brevet: **09.09.92**  (51) Int. Cl.5: **D06F 37/20**, F16F 7/08

(21) Numéro de dépôt: **87201938.5**

(22) Date de dépôt: **09.10.87**

(54) **Bras de suspension pour cuve de machine à laver le linge et machine à laver le linge ainsi équipée.**

(30) Priorité: **17.10.86 FR 8614440**

(43) Date de publication de la demande:
**27.04.88 Bulletin 88/17**

(45) Mention de la délivrance du brevet:
**09.09.92 Bulletin 92/37**

(84) Etats contractants désignés:
**DE FR GB IT**

(56) Documents cités:
EP-A- 0 042 708
EP-A- 0 080 243
DE-A- 2 406 144
DE-C- 955 749
FR-A- 1 570 563

PATENT ABSTRACTS OF JAPAN, vol. 8, no.
143 (M-306)[1580], 4 juillet 1984; & JP-A-59 40
040 (TOYOTA JIDOSHA K.K.) 05-03-1984

(73) Titulaire: **WHIRLPOOL FRANCE**
**2, rue Benoit Malon**
**F-92150 Suresnes(FR)**

(84) Etats contractants désignés:
**FR**

(73) Titulaire: **WHIRLPOOL INTERNATIONAL B.V.**
**Tarwelaan 58**
**NL-5632 KG Eindhoven(NL)**

(84) Etats contractants désignés:
**DE GB IT**

(72) Inventeur: **Fialon, Bernard Société Civile**
**S.P.I.D.**
**209, rue de l'Université**
**F-75007 Paris(FR)**

(74) Mandataire: **Melio, Jan Dirk et al**
**Whirlpool Italia S.r.l., Viale Guido Borghi 27**
**I-21025 Comerio (VA)(IT)**

## Description

La présente invention concerne un bras de suspension extensible pour l'amortissement de vibrations d'une cuve de machine à laver et à essorer le linge comprenant un ressort de traction aux deux extrémités ancrées dans deux embouts d'accrochage, ressort de traction logé dans un premier tube d'un premier embout, le premier tube coulissant dans un deuxième tube solidaire d'un deuxième embout.

Il est bien connu de pendre la cuve d'une machine à laver dans le châssis ou la carrosserie de la machine au moyen de dispositifs extensibles élastiques tels que des ressorts, et d'absorber l'énergie de vibration, engendrée par la rotation rapide (essorage) du tambour chargé de linge dans la cuve de lavage.

Des cuves de machines à laver équipées de systèmes amortisseurs sont déjà connues du brevet FR 1 570 563. Le document décrit d'abord un dispositif appliqué aux cyclomoteurs, et qui peut être éventuellement appliqué aux machines à laver. Ce dispositif comprend un ressort hélicoïdal contenu dans deux tubes télescopiques, c'est-à-dire coulissant l'un dans l'autre, chaque tube étant obturé par un embout muni d'un oeil pour son accrochage. Entre la surface externe du premier tube de plus petit diamètre et la surface interne du second tube de plus grand diamètre, se trouvent des bagues solidaires du premier tube. Bloqués par ces bagues, se trouvent, toujours entre les premier et second tubes coulissant, des patins de freinage semitubulaires, entraînés sans jeu par leurs trous centraux. Ces patins de freinage enserrent des lames élastiques disposées entre eux et le premier tube. Les patins de freinage peuvent être d'un matériau approprié à retenir un lubrifiant pour faciliter l'évacuation de la chaleur due à la friction. D'autres moyens de compensation thermique peuvent être prévus.

Ce document traite essentiellement du choix des matériaux pour établir une friction constante durant la vie de l'amortisseur, mais non pas d'un amortisseur à deux étapes.

Un exemple d'une machine est aussi donné dans le brevet FR 2 516 952. Le bras de suspension décrit dans ce document permet d'utiliser un ressort hélicoïdal à extrémités recourbées accrochées dans des oeillets percés dans des embouts et de faciliter la dissipation de la chaleur engendrée dans l'amortisseur, l'enveloppe cylindrique frottant sur le tube étant située à l'extérieur du bras, et pouvant ainsi avoir son diamètre le plus grand possible.

Le bras de suspension décrit a l'inconvénient d'avoir un amortissement constant d'une part quelle que soit l'amplitude du mouvement engendré par les vibrations de la cuve et d'autre part, quelle que soit la vitesse de rotation du tambour contenu dans ladite cuve.

Effectivement une machine à laver possède un certain nombre de fréquences propres dans le domaine des vitesses d'utilisation, en particulier une première fréquence propre, dans un intervalle compris entre 50 et 100 tours/min et entre autres une seconde fréquence propre à environ 200 tours/min. Aux vitesses inférieures à environ 100 tours/min, la force excitatrice est faible. Ne pouvant pas donner des valeurs d'amortissement trop faibles, préjudiciables au franchissement des vitesses critiques plus élevées, il est nécessaire de régler l'amortissement à la limite du cognement et cela à une vitesse correspondant aux fréquences propres plus grandes.

Il est donc utilisé un compromis, c'est-à-dire une valeur d'effort d'amortissement intermédiaire entre les efforts d'amortissement minimum et maximum.

Un autre inconvénient de l'amortissement constant est qu'aux grandes vitesses la puissance dissipée par les amortisseurs est grande. Les possibilités d'évacuation de calories ayant certaines limites, on arrive très rapidement à des températures très élevées entraînant une usure importante qui condamne l'utilisation d'amortisseurs non graissés. Or il est seulement nécessaire d'avoir un amortissement, uniquement au franchissement des vitesses critiques.

Le fait d'utiliser un amortissement constant entraîne aussi la génération d'un bruit supplémentaire lié à la fréquence d'inversion du système d'amortissement.

Le but de l'invention est d'une part d'amortir fortement le mouvement du bloc laveur au passage des fréquences propres, passage pendant lequel les mouvements du bloc laveur sont de grandes amplitudes et d'autre part de ne pas amortir les mouvements de faibles amplitudes.

Le bras de suspension, objet de l'invention, se caractérise par un dit moyen coopérant avec les deux tubes et leurs embouts ou avec un autre tube et permettant un degré déterminé de mouvement longitudinal entre un tube et un embout de sorte qu'il n'y ait pas d'amortissement des mouvements du bras quand les amplitudes de ces mouvements sont en deça d'un seuil A déterminé et quand les amplitudes du mouvement du bras dépassent le seuil A, les mouvements du bras et des tubes sont amortis par frottement entre les tubes coulissants/adjacents ou entre le deuxième tube externe et ledit moyen, et par un anneau élastique ou un étrier qui serre les deuxièmes tubes externes contre ledit moyen ou contre le premier tube interne pour établir la friction d'amortissage.

Le bras de suspension n'a pas de fonction d'amortissement lors du mouvement de faible amplitude de la cuve.

Le bras de suspension amortit uniquement au passage des vitesses critiques, il peut alors amortir très fortement au moment précis où il est nécessaire sans risque d'usure prématurée.

Ainsi le dispositif selon l'invention atteint les buts envisagés. Les dispositifs connus de l'état de la technique ne traitent pas de l'amortissement à deux étapes.

Dans un forme particulière de l'invention, le moyen autorisant un degré de liberté entre les deux tubes coulissants et leurs embouts est constitué d'un corps sensiblement cylindrique coulissant longitudinalement sur le premier tube interne et dans l'enveloppe, la course dudit corps étant limitée d'une part par un épaulement du premier embout et d'autre part par une butée de l'extrémité du premier tube externe, le corps étant en outre pincé radialement par l'enveloppe.

L'amortissement est alors réalisé entre le corps cylindrique et l'enveloppe, le degré de liberté étant obtenu par le fait que ledit corps coulisse librement dans le tube du premier embout.

Dans une autre forme de l'invention le moyen autorisant un degré de liberté entre un deuxième tube externe et l'embout correspondant est un manchon cylindrique constituant un moyen élastique lié par une de ses extrémités au tube externe et par l'autre extrémité à l'embout correspondant. Un tel manchon élastique peut être placé sur un ou deux embouts ; il a l'avantage de permettre une construction de bras de suspension simple et économique.

Dans une forme préférentielle de l'invention, à au moins une extrémité du corps cylindrique est disposé un moyen élastique. Le ou les moyens élastique(s) donne(nt) une raideur au mouvement relatif du corps. On peut concevoir de donner aussi un petit amortissement à ce mouvement relatif. Notre système a alors dans ce cas deux amortissements.

Dans une autre forme particulière de l'invention, un moyen élastique est placé entre une extrémité du corps mobile et le premier embout, ou encore un moyen élastique est placé entre une extrémité du corps mobile et la butée.

Préférentiellement, le moyen élastique est un ressort hélicoïdal. Tout autre moyen économique peut être utilisé tel que par exemple un tampon de caoutchouc, de mousse de métal ou de mousse synthétique. Une forme spécifique des extrémités du corps cylindrique, du premier embout ou de la butée peut donner aussi lors de sa réalisation un moyen élastique.

Particulièrement aux moyens élastiques est assujetti un moyen d'amortissement.

L'invention concerne également une machine à laver dont la cuve est accrochée à des bras de suspension du type décrit ci-dessus.

La description qui suit en se référant aux dessins annexés, le tout donné à titre d'exemple non limitatif, fera bien comprendre comment l'invention peut être réalisée.

La figure 1 est une vue en coupe longitudinale du bras de suspension.

La figure 2 est une vue en coupe longitudinale du bras de suspension muni de deux moyens élastiques d'amortissement du corps.

La figure 3 est un vue partielle du bras de suspension montrant une partie de l'enveloppe.

La figure 4 est une vue en coupe longitudinale d'une autre forme du bras de suspension.

La figure 5 est une fonction de l'amplitude du déplacement de la cuve d'une machine à laver en fonction de la fréquence de rotation du tambour, courbe sur laquelle sont données les formes d'amortissement.

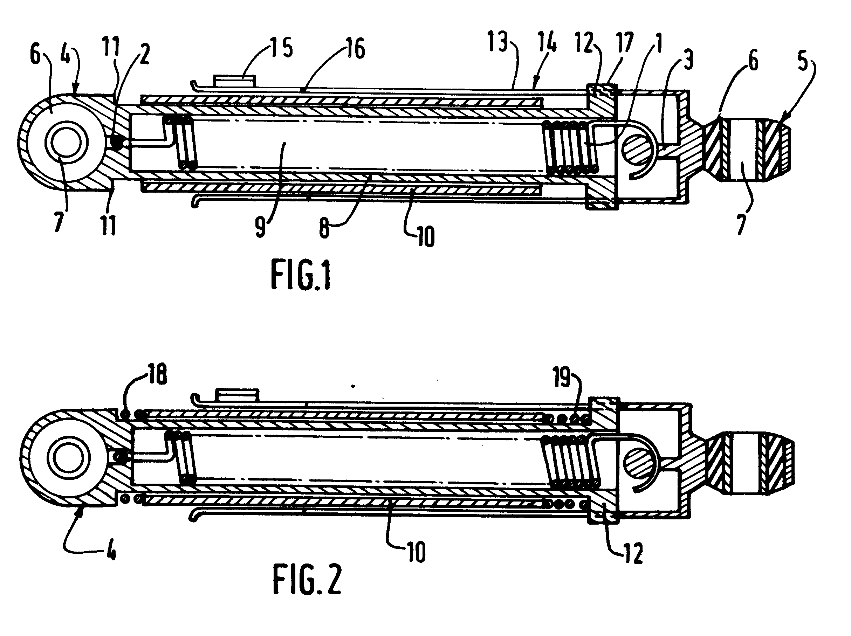

La figure 1 représente, conformément à l'invention, un bras de suspension en coupe longitudinale. Le bras de suspension est équipé d'un ressort hélicoïdal 1 destiné à travailler en traction, dont les extrémités recourbées sont accrochées dans des trous ou oeillets 2 et 3 pratiqués dans deux embouts 4 et 5. Sur les figures, les embouts 4 et 5 sont équipés de manchons élastiques 6 traversés de paliers 7 en vue de la fixation du bras au moyen d'un axe sur la cuve d'une part, et sur la carrosserie ou le châssis de la machine à laver, d'autre part. Tout autre mode d'articulation des embouts 4 et 5 sur cuve et carrosserie peut être envisagé.

L'embout 4 est réalisé d'une seule pièce avec un tube 8 s'étendant pratiquement jusqu'à l'embout 5 lorsque le ressort est détendu, et dans la cavité 9 duquel est logé librement le ressort 1.

Sur le tube 8 coulisse concentriquement avec un degré de liberté un corps 10 sensiblement cylindrique. Le déplacement longitudinal du corps 10 par rapport au tube 8 est limité d'une part, par un épaulement 11 usiné sur l'embout 4 et d'autre part, par une butée 12 montée à l'opposé de l'embout, à l'extrémité du tube 8.

Sur l'embout 5 sont assujetties au moins deux plaques 13, constituant une enveloppe 14 autour du corps 10. Les plaques 13, de préférence métalliques, ont par exemple la forme de coquilles cylindriques et enserrent le corps 10 dont elles couvrent sensiblement toute la longueur lorsque le ressort est détendu. Près de son extrémité à l'opposée de l'embout 5, l'enveloppe 14 est serrée sur le corps 10 par un anneau élastique 15 ou un étrier constitué par une lame de ressort. Ce serrage établit la friction qui permet au bras de suspension de transformer l'énergie cinétique de vibration en chaleur, pendant l'amortissement lorsque la cuve qui lui est assujettie oscille avec de grandes amplitudes. L'enveloppe 14 est échancrée sur presque toute sa longueur afin de présenter un bec 16 transversal. Dans la zone échancrée, peut circuler un ergot 17 appartenant à la butée 12 et dont la course est libre jusqu'au bec 16 ce qui constitue un arrêtoir à extension maximale du bras.

La figure 2 est une vue longitudinale du bras de suspension, muni de deux moyens élastiques 18, 19 qui lient le tube 8 au corps 10.

Dans une forme préférentielle de l'invention le corps 10 qui coulisse sur le tube 8 est lié élastiquement audit tube par deux tampons élastiques 18 et 19 qui dans cet exemple de réalisation sont deux ressorts hélicoïdaux.

D'autres moyens peuvent être envisagés. Les ressorts hélicoïdaux évitent les chocs qui pourraient se produire entre le corps 10 et l'embout 4 ou la pièce d'arrêt 12 lors du fonctionnement du bras de suspension. Un seul moyen élastique peut être suffisant si, lié mécaniquement, le moyen élastique est placé soit, entre l'embout 4 et le corps 10 soit, entre le corps 10 et la pièce d'arrêt 12.

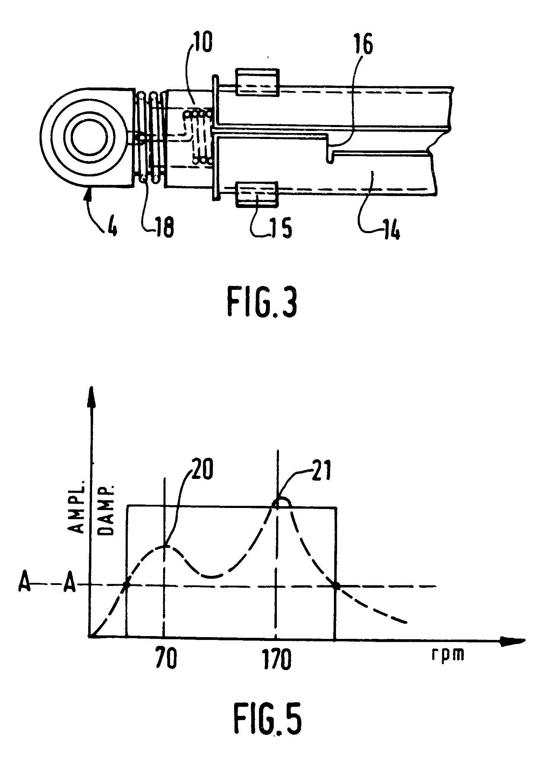

La figure 3 donne un détail du bras de suspension en montrant l'anneau élastique 15 qui ensère l'enveloppe 14 pour faire pression sur le corps 10 et engendrer un frottement.

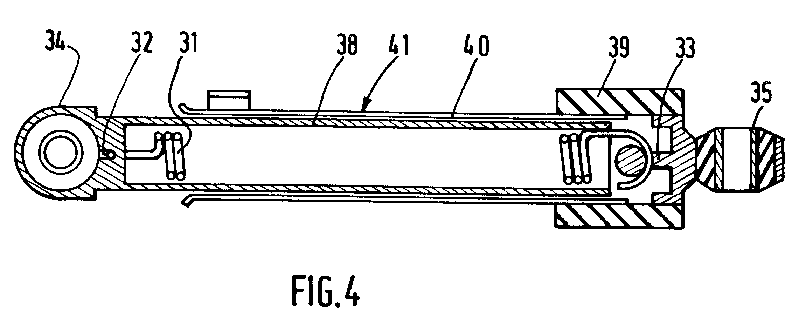

La figure 4 représente, dans une autre forme de l'invention un bras de suspension en coupe longitudinale. Le bras de suspension est équipé d'un ressort hélicoïdal 31 destiné à travailler en traction, dont les extrémités recourbées sont accrochées dans des trous ou oeillets 32 et 33 pratiqués dans deux embouts 34 et 35. L'embout 34 est moulé d'une seule pièce avec un tube 38, tube dans lequel est logé le ressort 31.

Un manchon élastique 39 est fixé par chacune de ses extrémités, d'une part au manchon 35 et d'autre part à des plaques 40 constituant une enveloppe 41 s'insérant autour du tube 38 pour former le moyen d'amortissement. Le manchon élastique peut aussi être placé entre l'embout 34 et le tube 38, dans le but par exemple de réduire l'encombrement du bras amortisseur.

Le manchon élastique de matière synthétique comme représenté sur la figure peut être aussi un manchon métallique contenant par exemple un ressort hélicoïdal.

Le bras de suspension décrit avec les figures 1, 2, 3, 5 fonctionne de la façon suivante. Les embout 4 et 5, attachés respectivement à la carrosserie et à la cuve de la machine à laver sont réunis par le ressort 1 seulement, et sont donc libres d'osciller l'un par rapport à l'autre, rappelés par la force du ressort.

Comme représentées sur la figure 5, les variations d'amplitudes du déplacement de la cuve, représentées en traits interrompus, donnent par exemple deux vitesses critiques 20 et 21.

Pour les amplitudes faibles, le corps reste solidaire de l'enveloppe, il n'y a donc pas amortissement.

Lorsque l'amplitude de l'oscillation augmente et dépasse le seuil fixé A le corps s'appuie sur l'embout 4 et se désolidarise de l'enveloppe 14. Le tube 10 et l'enveloppe 14 frottent alors l'un sur l'autre, transformant l'énergie cinétique d'oscillation en chaleur qui est dissipée dans l'atmosphère ambiante.

Lorsque l'amplitude de l'oscillation est inférieure au seuil A après le passage des fréquences propres, il n'est plus nécessaire d'avoir un amortissement. L'amortissement, représenté en trait continu, ne joue plus son rôle lors du deuxième passage aux grandes vitesses du seuil A désignant une valeur déterminée de l'amplitude.

Dans l'exemple décrit du bras de suspension équipé de deux ressorts hélicoïdaux placé entre l'embout 4 et le corps 10, le déplacement relatif du corps sur l'embout est soumis à une raideur. Il est possible d'envisager aussi d'ajouter un amortissement lorsque cela présente un intérêt fonctionnel.

Lors d'une grande amplitude nous pouvons envisager deux types de comportements suivant la raideur des deux types de ressorts :

. La mise en butée des moyens élastiques puis un fonctionnement de l'amortissement principal,

. La mise en jeu du corps imposée par la raideur du ressort comprimé, les spires n'étant pas jointes.

Le bras de suspension décrit avec la figure 4 et 5 fonctionne de la façon suivante. Le manchon élastique 39 qui est placé à côté du moyen d'amortissement permet lors du déplacement relatif des deux embouts, un fonctionnement sans amortissement, et cela au-dessous d'une amplitude déterminée A. Lorsque la force engendrée par la compression ou l'extension du manchon élastique dépasse la force de frottement du moyen amortisseur, celui-ci transforme l'énergie cinétique d'oscillation en chaleur qui est alors dissipée. Lorsque l'amplitude de l'oscillation est inférieure au seuil A, après le passage des fréquences propres, la force de frottement du moyen amortisseur est supérieure aux forces engendrées par l'élasticité du manchon, il n'y a donc plus amortissement.

**Revendications**

1. Bras de suspension extensible pour l'amortissement de vibrations d'une cuve de machine à laver et à essorer le linge comprenant un ressort de traction (1) aux deux extrémités ancrées dans deux embouts d'accrochage (4, 5 ou 34, 35), ressort de traction logé dans un premier tube (8, 38) d'un premier embout (4 ou 34), le premier tube coulissant dans un deuxième tube (14, 40) solidaire d'un deuxième embout (5 ou 35), caractérisé par un moyen (10, 39) coopérant avec les deux tubes (8, 14) ou avec un tube (41) et l'embout (35) et permettant un degré déterminé de mouvement longitudinal entre un tube et un embout de sorte qu'il n'y ait pas d'amortissement des mouvements du bras quand les amplitudes de ces mouvements sont en deça d'un seuil A déterminé et quand les amplitudes du mouvement du bras dépassent le seuil A, les mouvements du bras et des tubes (8, 14 ou 38, 41) sont amortis par frottement entre les tubes (38, 41) ou entre le deuxième tube (14) et le moyen (10), et par un anneau élastique (15) ou un étrier qui serre le deuxième tube (14, 41) contre le moyen 10 ou contre le tube (38) pour établir la friction d'amortissage.

2. Bras de suspension selon la revendication 1, caractérisé en ce que le moyen (10) autorisant un degré de liberté entre les deux tubes (8, 14) et leurs embouts (4, 5) est constitué d'un corps sensiblement cylindrique coulissant longitudinalement sur le tube (8) et dans l'enveloppe (14), la course dudit corps (10) étant limitée d'une part par un épaulement (11) du premier embout (4) et d'autre part par une butée (12) de l'extrémité du tube (8), le corps (10) étant en outre pincé radialement par l'enveloppe (14).

3. Bras de suspension selon l'une des revendications 1 ou 2, caractérisé en ce que l'enveloppe 14 est échancrée sur presque toute sa longueur en pésantant, en bout de l'échancrure, un bec (16) transversal et en ce que dans cette échancrure, un ergot (17) solidaire de la butée (12) circule librement lors du coulissement des tubes (8, 14), le bec (16) servant de butoir.

4. Bras de suspension selon l'une des revendications 2 ou 3, caractérisé en ce qu'à au moins une extrémité du corps (10) cylindrique est disposé un moyen élastique (18, 19).

5. Bras de suspension selon la revendication 4, caractérisé en ce qu'un moyen élastique (48) est placé entre une extrmité du corps mobile (10) et le premier embout (4).

6. Bras de suspension selon l'une des revendications 4 ou 5, caractérisé en ce qu'un moyen élastique (19) est placé entre une extrémité du corps mobile (10) et la butée (12).

7. Bras de suspension selon la revendication 1, caractérisé en ce que le moyen (39) autorisant un degré de liberté entre un tube (41) et l'embout (35) est un manchon (39) cylindrique constituant un moyen élastique lié par une de ses extrémités au tube (41) et par l'autre extrémité à l'embout (35) correspondant.

8. Bras de suspension selon l'une des revendications 4 à 7, caractérisé en ce qu au moyen élastique est en outre assujetti un moyen d'amortissement.

9. Bras de suspension selon l'une des revendications 4 à 7, caractérisé en ce que le moyen élastique est un ressort hélicoïdal.

10. Bras selon l'une des revendications précédentes, caractérisé en ce que les embouts (4, 5) sont équipés de manchons élastiques (6) traversés de paliers (7) pour la fixation du bras sur la cuve d'une part et sur le châssis de la machine d'autre part.

11. Bras selon l'une des revendications précédentes, caractérisé en ce que pour ancrer le ressort (1), ce dernier possède des extrémités recourbées, accrochées dans des trous ou oeillets (2, 3) pratiqués dans les deux embouts (4, 5).

**Claims**

1. Extensible suspension arm for damping vibrations of a laundry washing and spinning machine comprising a traction spring (1) with the two ends anchored in two fixing end pieces (4, 5 or 34, 35), which traction spring is accommodated in a first tube (8, 38) of a first end piece (4 or 34), the first tube sliding in a second tube (14, 40) integral with a second end piece (5, 35), characterised by a means (10, 39) cooperating with the two tubes (8, 14) or with one tube (41) and the end piece (35) and allowing a given degree of longitudinal movement between one tube and one end piece so that there is no damping of the movements of the arm when the amplitude of these movements is within a given threshold A, and when the amplitudes of movement of the arm exceed the threshold A, the movements of the arm and tubes (8, 14 or 38, 41) are damped by friction between the tubes (38, 41) or between the second tube (14) and the means (10), and by a resilient ring (15) or a clamp which clamps the second tube (14, 41) against the means (10) or against the tube (38) to establish the damping friction.

**2.** Suspension arm according to claim 1, characterised in that the means (10) enabling a degree of freedom between the two tubes (8, 14) and their end pieces (4, 5) consists of a substantially cylindrical body sliding longitudinally over the tube (8) and in the casing (14), the stroke of said body (10) being limited on the one hand by a shoulder (11) of the first end piece (4) and on the other hand by an end stop (12) of the tube (8), the body (10) being further pinched radially by the casing (14).

**3.** Suspension arm according to either of claims 1 or 2, characterised in that the casing (14) is grooved over nearly its whole length, comprising a transverse projection (16) at the end of the grooving, and in that in this grooving, a lug (17) integral with the stop (12) moves freely during sliding of the tubes (8, 14), the projection (16) serving as a stop.

**4.** Suspension arm according to either of claims 2 or 3, characterised in that at at least one end of the cylindrical body (10) is arranged a resilient means (18, 19).

**5.** Suspension arm according to claim 4, characterised in that a resilient means (48) is placed between one end of the movable body (10) and the first end piece (4).

**6.** Suspension arm according to either of claims 4 or 5, characterised in that a resilient means (19) is placed between one end of the movable body (10) and the stop (12).

**7.** Suspension arm according to claim 1, characterised in that the means (39) enabling a degree of freedom between one tube (41) and the end piece (35) is a cylindrical sleeve (39) forming a resilient means connected by one of its ends to the tube (41) and by the other end to the corresponding end piece (35).

**8.** Suspension arm according to any one of claims 4 to 7, characterised in that a damping means is further fixed to the resilient means.

**9.** Suspension arm according to any one of claims 4 to 7, characterised in that the resilient means is a coil spring.

**10.** Arm according to any one of the preceding claims, characterised in that the end pieces (4, 5) are provided with resilient sleeves (6) traversed by bearings (7) for fixing the arm to the tub on the one hand and to the chassis of the machine on the other hand.

**11.** Arm according to any one of the preceding claims, characterised in that to anchor the spring (1), the latter has curved ends fixed in holes or eyes (2, 3) formed in the two end pieces (4, 5).

**Patentansprüche**

**1.** Ausziehbarer Aufhängungsarm zur Dämpfung der Schwingungen eines Laugenbehälters einer Wasch- und Schleudermaschine, mit einer in einem ersten Rohr (8, 38) eines ersten Aufhängungsansatzes (4 bzw. 34) angeordneten Zugfeder (1), deren beiden Enden in jeweils einem von zwei Aufhängungsansätzen (4, 5 bzw. 34, 35) verankert sind, wobei das erste Rohr in einem zweiten mit einem zweiten Ansatz (5 bzw. 35) festverbundenen Rohr (14, 40) verschiebbar ist, gekennzeichnet durch ein Mittel (10, 39), das mit beiden Rohren (8, 14) oder mit einem Rohr (41) und dem Ansatz (35) zusammenwirkt und eine bestimmte Längsbewegung zwischen einem Rohr und einem Ansatz zulässt, derart, dass keine Dämpfung der Armbewegungen erfolgt, wenn die Amplituden dieser Armbewegungen unter einem bestimmten Schwellwert A liegen, und dass bei Überschreitung des Schwellwertes A durch die Armbewegungsamplituden die Bewegungen des Arms und der Rohre (8, 14 bzw. 38, 41) durch Reibung zwischen den Rohren (38, 41) oder zwischen dem zweiten Rohr (14) und dem Mittel (10) gedämpft werden, und gekennzeichnet durch einen elastischen Ring (15) oder einen Bügel, der das zweite Rohr (14, 41) gegen das Mittel (10) oder gegen das Rohr (38) zwecks Herstellung der Dämpfreibung presst.

**2.** Aufhängungsarm gemäss Anspruch 1, dadurch gekennzeichnet, dass das einen Freiheitsgrad zwischen beiden Rohren (8, 14) und deren Ansätzen (4, 5) zulassende Mittel (10) aus einem im wesentlichen zylindrischen, auf dem Rohr (8) und im Mantel (14) längsverschiebbaren Körper besteht, wobei der Hub dieses Körpers (10) einerseits durch eine Schulter (11) am ersten Ansatz (4) und andrerseits durch einen Anschlag (12) am Ende des Rohrs (8) begrenzt wird, und dass der Körper (10) ausserdem durch den Mantel (14) radial geklemmt ist.

**3.** Aufhängungsarm gemäss einem der Ansprüche 1 und 2, dadurch gekennzeichnet, dass der Mantel (14) einen fast über die gesamte Mantellänge sich erstreckenden Ausschnitt und am Ausschnittende eine Quernase (16) aufweist, und dass in diesem Ausschnitt ein mit dem Anschlag (12) festverbundener Nocken (17) beim Verschieben der Rohre (8, 14) frei bewegbar ist, wobei die Nase (16) als Puffer wirkt.

4. Aufhängungsarm gemäss Anspruch 2 oder 3, dadurch gekennzeichnet, dass an wenigstens einem Ende des zylindrischen Körpers (10) ein elastisches Mittel (18, 19) angeordnet ist.

5. Aufhängungsarm gemäss Anspruch 4, dadurch gekennzeichnet, dass ein elastisches Mittel (18) zwischen einem Ende des beweglichen Körpers (10) und dem ersten Ansatz (4) angeordnet ist.

6. Aufhängungsarm gemäss Anspruch 4 oder 5, dadurch gekennzeichnet, dass ein elastisches Mittel (19) zwischen einem Ende des beweglichen Körpers (10) und dem Anschlag (12) angeordnet ist.

7. Aufhängungsarm gemäss Anspruch 1, dadurch gekennzeichnet, dass das einen Freiheitsgrad zwischen einem Rohr (41) und dem Ansatz (35) zulassende Mittel (39) aus einer zylindrischen Muffe (39) besteht, die ein an dem einen Ende mit dem Rohr (41) und am anderen Ende mit dem entsprechenden Ansatz (35) verbundenes elastisches Mittel bildet.

8. Aufhängungsarm gemäss einem der Ansprüche 4 bis 7, dadurch gekennzeichnet, dass ausserdem am elastischen Mittel ein Dämpfungsmittel befestigt ist.

9. Aufhängungsarm gemäss einem der Ansprüche 4 bis 7, dadurch gekennzeichnet, dass das elastische Mittel eine Schraubenfeder ist.

10. Aufhängungsarm gemäss einem der vorhergehenden Ansprüche, dadurch gekennzeichnet, dass zur Befestigung des Armes am Laugenbehälter einerseits und am Maschinengestell andrerseits die Ansätze (4, 5) mit von Lagern (7) durchquerten, elastischen Muffen (6) ausgestattet sind.

11. Aufhängungsarm gemäss einem der vorhergehenden Ansprüche, dadurch gekennzeichnet, dass zwecks Verankerung der Feder (1) die Enden der letzteren umgebogen und in an beiden Ansätzen (4, 5) angebrachten Bohrungen oder Osen (2, 3) eingehängt sind.

FIG.1

FIG.2

EP 0 265 004 B1

FIG.3

FIG.5

FIG.4